# EUROPEAN PATENT SPECIFICATION

(11) **EP 2 256 941 B1**
(45) Date of publication and mention of the grant of the patent: **20.04.2016**
(21) Application number: 10174878.8
(22) Date of filing: 24.08.2004
(51) Int. Cl.: H04B 1/38, G01S 19/35, G01S 19/34, G01S 19/23

(54) **Combined navigation satellite receiver/communications device**
Kombinierter Satellitennavigationsempfänger / Kommunikationsgerät
Combination d'un récepteur de navigation par satellite avec un dispositif de télécommunication

(30) Priority: 04.09.2003 US 656078
(43) Date of publication of application: 01.12.2010
(62) Divisional of application: 04020084.2
(73) Proprietor: eRide, Inc., San Francisco, California 94118-1837 (US); Seiko Epson Corporation, Tokyo 163 (JP)
(72) Inventor: McBurney, Paul W., San Francisco, CA 94118 (US); Woo, Arthur N., Cupertino, CA 95014 (US); Rode, France (NMI), Los Altos, CA 94024 (US)
(74) Representative: Grünecker Patent- und Rechtsanwälte PartG mbB

(56) References cited:
- WO-A1-97/33382
- WO-A1-99/13595
- US-A- 5 949 812
- US-A- 6 122 506
- US-A- 6 133 871

## Description

### 1. Field of the Invention

The present invention relates to combinations of navigation satellite receivers and communication devices, and more particularly to sharing crystal oscillators between GPS receivers and cellphone handsets.

### 2. Description of the Prior Art

Most consumer electronic devices are mass produced and their sales are very dependent on how they are priced. One way to offer better prices is to reduce manufacturing costs, e.g., the cost of labor and the components used. Combinations of navigation satellite receivers and communication devices are now available, and many conventional commercial products provide one set of crystals and crystal oscillators for the navigation satellite receiver part, and a separate set for the communication devices.

One of the present inventors, Paul McBurney, together with some others, have recently filed several United States Patent Applications for inventions relating to GPS receivers. These are summarized in Table II. All such patent applications have been assigned to the same Assignees
US A 6, 122, 506 relates to a combination of a GSM mobile phone and a GPS navigation device. The GPS RF section provides a reference signal to the GSM RF section and GSM receiver periodically receives a frequency correction beacon and corrects the frequency accordingly.
WO 99/13595 A1 relates to a wireless mobile terminal including wireless transceiver and GPS receiver, which may share reference frequency signal of an oscillator signal or a radio frequency signal or a radio frequency control signal. The frequency error may be corrected to the based station carrier.
US A 5, 949, 812 relates to a GPS receiver capable of slowing down the system clocks during low navigation activity periods.
US A 6, 133, 871 relates to a GPS receiver with power management feature such as powering down the GPS receiver while powering the DSP when the GPS signals have been received and stored in memory.
WO 97/33382 relates to a GPS receiver receiving satellite almanach data from a base station via communication link and determining Doppler data accordingly.

**TABLE II**

| Docket No. | Title | Inventors | USPTO Filing | USPTO Serial No. | U.S. Patent |
|---|---|---|---|---|---|
| 734-01 | Navigation satellite receiver and Method of | P.McBurney, A.Woo | 11-Oct-00 | 09/687,044 ! | 6,437,734 08-20-02 |
| 734-02 | Infrastructure-Aiding for Satellite Navigation satellite receiver and Method | P.McBurney, A. Woo | 28-Feb-01 | 09/797,521 | 6,473,030B1 10-29-02 |
| 734-03 | High sensitivity GPS Receiver and Reception | P.McBurney, A. Woo | 19-Feb-02 | 10/079,245 | |
| 734-04 | Total Correction Strategy | Stephen J, Edwards, P.McBurney | 19-Feb-02 | 10/079,217 | |
| 734-05 | Method and System for Position Calculation from Calculated Time | S.Edwards, P.McBurney | 19-Feb-02 | 10/079,244 | |
| 734-06 | Computing Network Path Delays so Accurate Absolute Time can be Forwarded from a Server to a Client | H.Matsushita, P.McBurney | 19-Feb-02 | 10/079,251 | |
| 734-07 | No Preamble Frame Sync | Akira Kimura, P.McBurney | 19-Feb-02 | 10/079,250 | |
| 734-08 | Thin Client | P.McBurney, C.Rasmussen, F.Vaucher, K. Victa | 19-Feb-02 | 10/079,249 | 6,584,404 6-24-03 |
| 734-09 | Software Crystal Oscillator | H.Matsushita, P.McBurney | 19-Feb-02 | 10/079,248 | 6,509,870B1 01-21-03 |
| 734-10 | High Sensitivity Infrequent Use of Sensors | P.McBurney, K.Victa | 19-Feb-02 | 10/079,247 | 6,559,795 5-6-03 |
| 734-11 | Real Time Clock (RTC) | P.McBurney | 19-Feb-02 | 10/079,253 | |
| 734-12 | Shared Reference Station | C.Rypinski, M.Junkar | 19-Feb-02 | 10/079,252 | |
| 734-13 | Client-Aided Doppler Estimation | P. McBurney, W.J. Morrison | 07-Aug-02 | 10/215,138 | |
| 734-15 | Synthetic Nav-Data For A High-Sensitivity Satellite Positioning System Receiver | P. McBurney, W.J. Morrison | not yet filed | | |

There is a need for a less expensive-to-produce combination of a navigation satellite receiver and a communication device.

### SUMMARY OF THE INVENTION

The objectives are achieved by the features of the independent claims.

Briefly, a combination of a navigation satellite receiver and a communication device embodiment of the present invention exchanges precise synthesized frequencies and clocks between the navigation satellite receiver and the communication device. In one embodiment, a TCXO crystal serves as a reference for the navigation satellite receiver and locking onto the satellite transmissions allows highly accurate frequency synthesis and clock generation by it for the communication device. In another embodiment, a VCO primarily affiliated with the communication device serves as a basic reference for the navigation satellite receiver, and subsequent locking onto the satellite transmissions again allows highly accurate frequency synthesis and clock generation for the communication device. In a further embodiment, a VCO primarily affiliated with the communication device serves as a basic reference for the navigation satellite receiver after it locks onto the communications systems standards. The navigation satellite receiver therefore has reduced clock uncertainty and can initialize and track satellites much faster than otherwise.

An advantage of the present invention is that a system and method is provided for a navigation receiver to operate accurately with less than a full ephemeris for any particular GPS satellite.

These and other objects and advantages of the present invention will no doubt become obvious to those of ordinary skill in the art after having read the following detailed description of the preferred SPS receivers which are illustrated in the various drawing figures.

### IN THE DRAWINGS

Fig. 1 is a schematic diagram of a combination GPS satellite navigation receiver part and communication device system embodiment of the present invention in which the communication device's VCO provides a reference frequency assist to the GPS part;
Fig. 2 is a schematic diagram of a combination GPS satellite navigation receiver and communication device system embodiment of the present invention in which the communication VCO device's provides a reference frequency assist to the GPS part and therefore eliminates a GPS crystal oscillator; and
Fig. 3 is a schematic diagram of a multiple re-use of frequencies in a combination GPS satellite navigation receiver and communication device system embodiment of the present invention.

### DETAILED DESCRIPTION OF THE PREFERRED EMBODIMENT

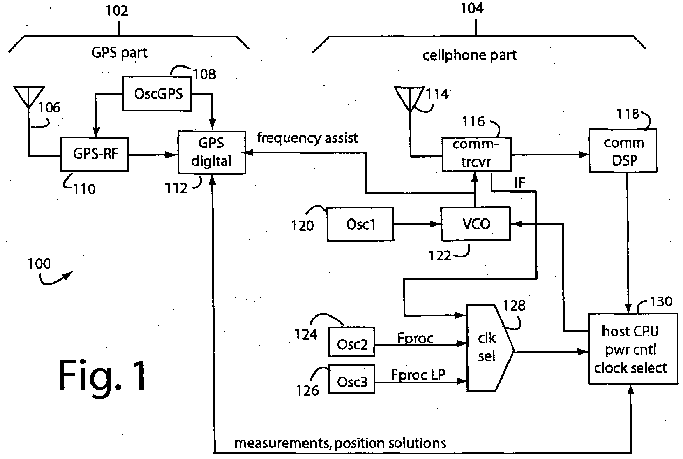

Fig. 1 illustrates a basic integrated combination of a satellite navigation receiver and communication device system embodiment of the present invention, and referred to by the general reference numeral 100. The system 100 has two parts, including a navigation receiver in the form of a global position system (GPS) receiver 102, and communication device in the form of a cellphone 104 that provides reference frequency assistance to the GPS part 102. The GPS part 102 is either a self-contained positioning model or a measurement model with positioning code executed on a host CPU.

In general, the present invention provide for sharing of oscillators to reduce the number of crystals and crystal oscillators needed in the implementations, e.g., to save on the manufacturing costs. In a mass production market, small price reductions frequently results in significantly higher sales volumes.

In system 100, the GPS part 102 comprises a GPS patch antenna 106, a GPS-oscillator 108, a GPS RF-receiver 110, and a GPS digital signal processor 112. The GPS part 102 can simply take measurements and forward them to a host CPU for position solution processing, or process the position solutions itself. Sharing a highly capable host CPU with the cellphone part 104 provides a way to reduce overall costs.

The cellphone part 104 comprises a cellphone antenna 114, a communications transceiver 116, a cellphone digital signal processor (DSP) 118, a first oscillator (osc1) 120 that feeds a voltage controlled oscillator (VCO) 122, a second oscillator (osc2) 124, a third oscillator (osc3) 126, and a clock selector 128. A host CPU 130 provides high level functionality to both the GPS part 102 and the cellphone part 104.

Several crystal re-use and frequency sharing arrangements are possible in embodiments of the present invention. For example, the GPS part can be arranged to supply a reference crystal frequency to the phone part to re-use a crystal, e.g., to eliminate the need for a VCO crystal oscillator in the communications device. The GPS could also provide accurate frequency to the communications device to improve its acquisition and tracking of the communications VCO; or/and provide a phone processor clock in both nominal and high power consumption environments; or/and be used to source a frequency synthesizer to supply any continuous frequency within its generation range; or/and can supply time events to the host CPU 130 that are accurate GPS time events; or/and can supply time events in host CPU time frame via an offset from GPS system time; or/and can supply real-time-clock capabilities to host CPU.

The oscillators referred to herein include OscGPS 108 (Fig. 1) which generates all frequencies for GPS RF and digital processing. Osc1 120 produces a reference for the communications VCO and synthesizes all the RF frequencies needed for the communications device, e.g., a high RF frequency and an intermediate IF frequency. The Osc2 124 produces "Fproc" as the normal operating frequency for the communications CPU, and Osc3 126 for low-power frequency "FprocLP" used for idle, standby or off times.

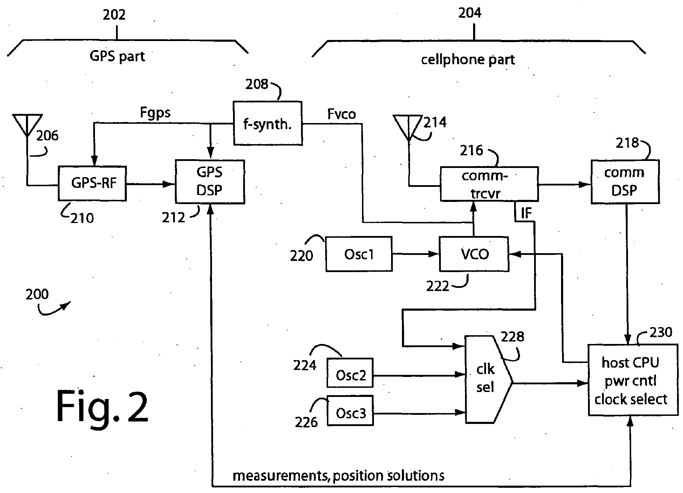

Fig. 2 illustrates another integrated combination of a satellite navigation receiver and communication device system embodiment of the present invention, and referred to by the general reference numeral 200. The system 200 has a global position system (GPS) receiver part 202, and a cellphone part 204 wherein the cell phone part 204 provides a reference frequency good enough to eliminate the need for a separate GPS crystal oscillator in the GPS part 202.

In system 200, the GPS part 202 comprises a GPS patch antenna 206, a GP-frequency synthesizer 208, a GPS RF-receiver 210, and a GPS digital signal processor 212. The GPS-synthesizer 208 eliminates the need of a GPS crystal oscillator, e.g., GPS-oscillator 108, by synthesizing the GPS reference frequency (Fgps) directly from the VCO frequency (Fvco). When Fvco is locked by the communications system reference standards, the frequency is very exact and dependable.

The cellphone part 204 comprises a cellphone antenna 214, a communications transceiver 216, a cellphone digital signal processor (DSP) 218, a first oscillator (osc1) 220 that feeds a voltage controlled oscillator (VCO) 222, a second oscillator (osc2) 224, a third oscillator (osc3) 226, and a clock selector 228. A host CPU 230 provides high level functionality to both the GPS part 202 and the cellphone part 204. The first oscillator (osc1) 220 is typically a temperature compensated crystal oscillator (TCXO). The third oscillator (osc3) 226 is typically a 32-KHz real time clock (RTC) that can be based on a watch crystal.

One advantage of GPS is that high accuracy positions can be obtained even while depending on low cost crystal oscillator reference frequency sources. But problems can arise when the GPS reference frequency is derived from a communications VCO. Frequency jumps can afflict the GPS reference frequency when the communications VCO transitions between different cell towers, e.g., because of different base transmitter frequency offsets, and because the velocity vector to respective towers can be very different. The resulting delta-Doppler can be significant. There can also be residual uncompensated frequency errors in the automatic frequency compensation (AFC) frequency loop of the communications device. The communications device can tolerate larger frequency errors in comparison to the data rate that can be tolerated by the GPS receiver. Reducing the frequency that the AFC loop updates can be used to minimize data processing and CPU loading. The residual frequency error can increase when the communications device goes into standby mode with the frequency control in open loop and drifts uncorrected.

Frequency stability is important in communication systems, but the data rate is much higher than the typical frequency errors so it can still be properly demodulated. The data is detected at a much higher bandwidth than the low frequency VCO hold off error. Unlike the GPS part, precise carrier tracking is not needed as long as the data can be demodulated properly. When frequency updates are received, such are band limited to reduce jump inputs into the VCO. But, signal outages and tower changes will nevertheless introduce frequency errors during open loop operation that adversely impact the GPS operation.

High frequency changes in the reference frequency for the GPS affects searching, and not the ultimate accuracy of GPS position solutions. Some problems accompany using a GPS reference frequency derived from a VCO. A NavData collection error occurs if the frequency jump during the 20-msec period is more than a half cycle of the data bit and the data will not be decoded correctly. A frequency assistance error occurs if the VCO error is driven by tower frequency error, communications velocity, or loop error. The GPS receiver encounters error when trying to cross-calibrate with the communications device frequency, e.g., a frequency assistance method embodiment of the present invention.

Sensitivity loss can occur. Narrow band integration is preferred in high sensitivity GPS receivers. The VCO frequency error causes an error in GPS measurement. If it is common mode, it effects the GPS drift estimate. An error in such frequency estimate causes errors in the frequency prediction of where to acquire the satellite. Any error increases the amount of search required, thus delaying the fix. Frequency errors in tracking the GPS signal cause position errors for long measurement integrations required for high sensitivity. An error in frequency during long correlations spreads the energy across many pseudorange code phases. Thus, signal power is lost and the true peak is not known.

In a PDC-telephone network, the typical error budget includes 0.1 PPM base station stability, 100 mph = 44 mls = 230Hz = 0.15PPM, loop budget 0.2PPM, all for total of almost 0.45PPM. Therefore using a VCO as a frequency source for a GPS receiver is practical. On the other hand, modern low-cost TCXO oscillators are able to provide similar or better stability if software modeling is used.

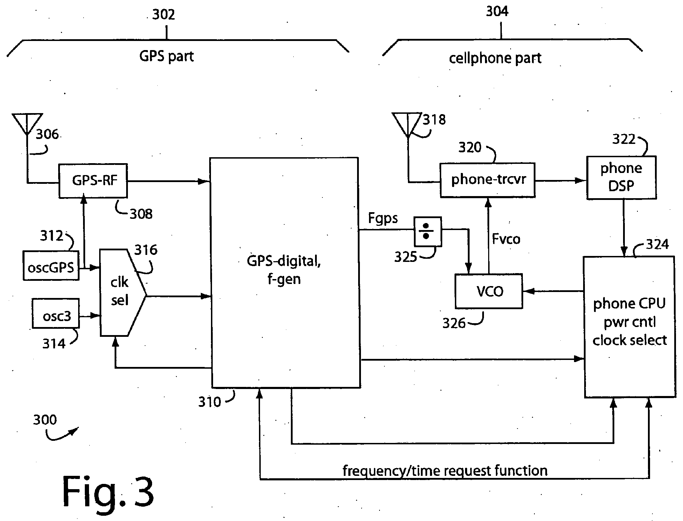

Fig. 3 illustrates a multiple re-use of frequencies in an integrated combination of a satellite navigation receiver and communication device system embodiment of the present invention, referred to by the general reference numeral 300. The system 300 has a GPS part 302 and a cellphone part 304 that are both integrated within the same portable or handheld device. The GPS part 302 includes a GPS antenna 306, a GPS RF-receiver 308, a GPS digital processor and frequency generator (chip) 310, a GPS oscillator (oscGPS) 312, and a low frequency oscillator (osc3) 314. A clock selector 316 selects between normal and low-power operation, e.g., by clock frequency choices. The cellphone part 304 includes a cellphone antenna 318, a communications transceiver 320, a digital signal processor 322, a phone CPU-power control-clock selector 324, a divider 325, and a voltage controlled oscillator (VCO) 326.

The divider 325 is included to increase the relative stability and accuracy of the reference frequency applied to VCO 326. The cellphone part 304 is not as dependent on its cellphone base station providing good reference frequencies for proper CDMA operation when it has very accurate references locally. If all the mobile phones operating in a base station area had such GPS-provided reference signals, the base station would not need to be equipped with expensive atomic clocks.

Communication devices generally need their own faster processor crystals, since the typical VCO oscillator operates in the relatively slow 10-13 MHz range. Some processors need to be able to switch to even higher frequencies for special communications functions. An intermediate frequency (IF) used in the down conversion process and produced in the RF chip can be used to run applications that require more computation resources. A low frequency oscillator is selected for low-power time maintenance, and is typically a 32-KHz crystal.

At turn-on, the GPS chip 310 loads a default startup processor clock selection for the phone CPU 324, e.g., from a non-volatile memory location. The host processor clock frequency is generated by multiplying GPS clock for input to a numeric controlled oscillator (NCO). Such NCO can then be digitally programmed to generate any output frequency up to half of its input frequency. The GPS part 302 puts itself into a sleeping, low-power mode and lets the user decide when to use the GPS. A host system begins operating when its clock is stable. The host can then chose different frequencies, via the communication between the host CPU 324 and GPS digital chip 310. The phone part 304 can request a general frequency number by sending a desired frequency. It can control when the VCO is turned onto the frequency to be used, e.g., 12.6MHz for the Japanese PDC system. If the GPS part 302 is tracking GPS satellites and solving for its frequency error, it can then compensate the requested 12.6MHz by what it knows to be the error in the GPS crystal. Thus, it can provide a more stable frequency to the communications device VCO 326. If low-power mode is needed, the communications device 304 can request that the GPS part 302 enter low-power mode. It keeps time with the low frequency crystal input from osc3 314. If the GPS oscillator 312 can be made low-power, the 32kHz oscillator 314 can be eliminated. The GPS part 302 can send interrupts to the phone part 304 on time-events lines to wake certain processes that need to occur at regular but accurate intervals.

The GPS part 302 provides a VCO frequency corrected by GPS satellite time standards, and is very accurate. A variable VCO from the GPS part 302 can be supplied that is responsive to requests from the phone part 304, e.g., for frequency stepping operations needed in frequency-division multiple access (FDMA) systems. An analog sinusoidal voltage can be output by the GPS part 302 to approximate a crystal output. Such may be requested by using bits from the top of an adder for accurate phase. Such phase is converted with a table having more representative levels for a sinusoid rather than the linear counter value. A table value can be converted to an analog signal in a digital to analog converter. The overflow of the adder can also be used to generate a simple 1-bit digital clock frequency. Time interval interrupts can be constructed from combinations of the GPS second and millisecond interrupts in the GPS receiver, and osc3 314. The timing of events can be phased to any time frame of reference by using offsets.

In a method embodiment of the present invention, the number of source oscillators in an integrated combination navigation receiver and cellphone is reduced to two, e.g., a GPS crystal oscillator at about 27-MHz and a watch crystal oscillator at about 32-KHz. A multiplier is connected to the GPS crystal oscillator to produce higher frequencies. Two numeric controlled oscillators (NCO1 and NCO2) are used, respectively, to generate VCO and host CPU frequencies. A time event logic produces time events to the host CPU from combinations of GPS msec interrupts, GPS second pulses, digital offsets, and the watch crystal oscillator.

In general, embodiments of the present invention improve both manufacturing costs and device performance. For example, the navigation receiver supplies a reference crystal frequency to the communications device to re-use a crystal, thus eliminating the need for a second crystal, the communications VCO crystal. And, when the navigation receiver supplies such reference crystal frequency to the communications device, the communications receiver sensitivity is improved because the frequency uncertainty is so much reduced the initial frequency search space can be trimmed. The receiver is thus able to search for signal in the frequency domain using smaller increments or steps, but still be able to find initial lock in a reasonable time.

Although the present invention has been described in terms of the presently preferred SPS receivers, it is to be understood that the disclosure is not to be interpreted as limiting. Various alterations and modifications will no doubt become apparent to those skilled in the art after having read the above disclosure.

## Claims

1. An integrated satellite navigation receiver and communication device combination system, comprising:
a single portable device that includes a global positioning system receiver part (302) and
a cellphone part (304);
said GPS receiver part (302) including a GPS RF-receiver (308), a GPS digital processor and frequency generator (310), and a GPS oscillator (312);
said cellphone part (304) including a cellphone transceiver (320), a digital signal processor (322), and a phone host CPU (324);
**characterized in that**
said GPS receiver part (302) further including a lower-frequency 32kHz crystal oscillator (314) and a clock selector (316) for selecting between clock frequency for normal operation and clock frequency for time-keeping only low-power operation; and
said communications transceiver part (304) further including a divider (325), and a voltage controlled oscillator (326);
wherein, at turn-on, the GPS digital processor and frequency generator (310) being adapted to load a default startup processor clock selection for said phone host CPU (324), the phone host CPU clock frequency being generated by multiplying a GPS clock generated by the GPS
oscillator that is input to a numeric controlled oscillator being digitally programmed to generate the requested output frequency; and
wherein the GPS receiver part (302) being adapted to compensate a requested frequency to provide a more stable frequency to said voltage controlled oscillator (326), if the GPS receiver part (302) is tracking GPS satellites and solving for its frequency error.

2. The system of claim 1, wherein:
a host is enabled to choose different frequencies via a communication link between the phone host CPU (324) and said frequency generator (310); and
said cellphone part (304) being adapted to request a particular output frequency, and control when said voltage controlled oscillator (326) begins outputting such frequency.

3. The system of claim 1 or 2, wherein the communications device (304) being adapted to send a request for said GPS receiver part (302) to enter said low-power mode if a low-power mode is to be engaged.

4. The system of any of claims 1 to 3, wherein time is maintained with the low frequency crystal with an input from said lower-frequency oscillator (314).

5. The system of any of claims 1 to 4, wherein said GPS receiver part (302) being adapted to send interrupts to the communications transceiver part (304) that wake certain processes.

6. The system of any of claims 1 to 4, wherein the GPS receiver part (302) being adapted to put itself into a sleeping, low-power mode and enable a user to decide when to use the GPS function.

7. The system of any of claims 1 to 6, further comprising a variable-VCO output from said GPS receiver part (302) responsive to requests from said cellphone part (304) to generate particular frequencies, waveforms, and phasing.

8. The system of any of claims 1 to 7, further comprising a time interval interrupt constructed from combinations of GPS-second and GPS-millisecond interrupts included in said GPS receiver part (302).

## Patentansprüche

1. Kombinationssystem aus integriertem Satellitennavigationsempfänger und Kommunikationsgerät mit:
einem einzelnen tragbaren Gerät, das einen Empfängerteil mit einem globalen Positioniersystem (302) und einen Mobilfonteil (304) enthält:
wobei der GPS Empfängerteil (302) einen GPS HF-Empfänger (308), einen GPS Digitalprozessor und Frequenzgenerator (310) und einen GPS Oszillator (312) enthält;
wobei der Mobilfonteil (304) ein Mobilfon Sende/Empfangsgerät (320), einen digitalen Signalprozessor (322) und eine Telefon Host-CPU (324) enthält;
**gekennzeichnet dadurch, dass**
der GPS Empfängerteil (302) des Weiteren einen niederfrequenten 32kHz Quarzoszillator (314) und einen Taktselektor (316) zum Auswählen zwischen einer Taktfrequenz für den Normalbetrieb und einer Taktfrequenz für die Zeitmessung nur bei niedrigem Stromverbrauch enthält; und
wobei der Kommunikationssende-/empfangsteil (304) des Weiteren einen Teiler (325) und einen spannungsgesteuerten Oszillator (326) enthält;
wobei beim Einschalten der GPS Digitalprozessor und Frequenzgenerator (310) angepasst ist, um eine Prozessortaktauswahl bei Standard-Inbetriebnahme für die Telefon Host-CPU (324) zu laden, wobei die Taktfrequenz der Telefon Host-CPU durch Multiplizieren eines durch den GPS Oszillator erzeugten GPS Taktes erzeugt wird, der in einen numerisch gesteuerten Oszillator eingegeben wird, der digital programmiert ist, um die erforderliche Ausgangsfrequenz zu erzeugen; und
wobei der GPS Empfängerteil (302) angepasst ist, um eine erforderliche Frequenz zu kompensieren, um dem spannungsgesteuerten Oszillator (326) eine stabilere Frequenz bereitzustellen, wenn der GPS Empfängerteil (302) die GPS Satelliten vorfolgt und seinen Frequenzfehler auflöst.

2. System nach Anspruch 1, wobei:
der Host in die Lage versetzt wird, unterschiedliche Frequenzen über einen Kommunikationslink zwischen der Telefon Host-CPU (324) und dem Frequenzgenerator (310) auszuwählen; und
der Mobilfonteil (304) angepasst ist, um eine partikuläre Ausgangsfrequenz anzufordern und zu steuern, wenn der spannungsgesteuerte Oszillator (326) damit beginnt, eine derartige Frequenz auszugeben.

3. System nach Anspruch 1 oder 2, wobei das Kommunikationsgerät (304) angepasst ist, um eine Anforderung für den GPS Empfängerteil (302) zu senden, um in den Modus für niedrigen Stromverbrauch einzutreten, wenn der Modus für niedrigen Stromverbrauch in Anspruch genommen werden soll.

4. System nach einem der Ansprüche 1 bis 3, wobei Zeit mit dem Niederfrequenzquarz mit einer Eingabe vom Niederfrequenzoszillator (314) aufrechterhalten wird.

5. System nach einem der Ansprüche 1 bis 4, wobei der GPS Empfängerteil (302) angepasst ist, um Unterbrechungen an den Kommunikationssende-Empfangsteil (304) zu senden, die bestimmte Prozesse wachrufen.

6. System nach einem der Ansprüche 1 bis 4, wobei der GPS Empfängerteil (302) angepasst ist, um sich selbst in einen Schlafmodus bei niedrigem Stromverbrauch zu bringen und den Anwender in die Lage zu versetzen, zu entscheiden, wann die GPS Funktion genutzt wird.

7. System nach einem der Ansprüche 1 bis 6, des Weiteren mit einer variablen VCO Ausgabe von dem GPS Empfängerteil (302) als Reaktion auf die Anforderungen von dem Mobilfonteil (304), um partikuläre Frequenzen, Wellenformen und Phaseneinstellung zu erzeugen.

8. System nach einem der Ansprüche 1 bis 7, des Weiteren mit einer Zeit-Intervallunterbrechung, die aus Kombinationen von GPS Sekunden- und GPS Millisekundenunterbrechungen aufgebaut ist, die in dem GPS Empfängerteil (302) enthalten sind.

## Revendications

1. Système de combinaison d'un récepteur de navigation par satellite intégré et dispositif de télécommunication, comprenant :
un dispositif portable unique qui inclut une partie réceptrice de système de positionnement global (302) et une partie de téléphone cellulaire (304) ;
la dite partie réceptrice GPS (302) incluant un récepteur de RF GPS (308), un processeur digital et générateur de fréquence GPS (310), et un oscillateur GPS (312) ;
la dite partie de téléphone cellulaire (304) incluant un émetteur-récepteur de téléphone cellulaire (320), un processeur de signal digital (322), et un CPU de téléphone hôte (324) ;
**caractérisé en ce que**
la dite partie réceptrice GPS (302) comprend en outre un oscillateur de cristal a basse fréquence 32kHz (314) et un sélectionneur d'horloge (316) pour sélectionner entre une fréquence d'horloge pour une opération normale et une fréquence d'horloge pour un chronométrage d'opération à basse puissance seulement ; et
ladite partie émetteur-récepteur de communications (304) comprend en outre un diviseur (325), et un oscillateur contrôlé par voltage (326) ;
dans lequel, à l'allumage, le processeur digital GPS et le générateur de fréquence (310) étant adaptés pour charger une sélection de démarrage par défaut d'horloge de processeur pour ledit CPU de téléphone hôte (324), la fréquence d'horloge du CPU de téléphone hôte étant générée par multiplication d'une horloge GPS générée par l'oscillateur GPS qui est entrée dans un oscillateur contrôlé numériquement étant digitalement programmé pour générer la fréquence de sortie demandée ; et
dans lequel la partie réceptrice GPS (302) est adaptée pour compenser une fréquence demandée pour fournir une fréquence plus stable au dit oscillateur contrôlé par voltage (326), si la partie réceptrice GPS (302) suit des satellites GPS et résout son erreur de fréquence.

2. Système selon la revendication 1, dans lequel :
un hôte est activé pour choisir des fréquences différentes via un lien de communication entre le CPU de téléphone hôte (324) et le dit générateur de fréquence (310) ; et
la dite partie de téléphone cellulaire (304) est adaptée pour demander une fréquence de sortie particulière, et contrôler quand le dit oscillateur contrôlé par voltage (326) commence l'émission d'une telle fréquence.

3. Système selon la revendication 1 ou 2, dans lequel le dispositif de communication (304) est adapté pour envoyer une demande pour ladite partie réceptrice GPS (302) pour entrer le dit mode de basse puissance si un mode de basse puissance doit être engagé.

4. Système selon l'une quelconque des revendications 1 à 3, dans lequel le temps est maintenu avec le cristal de basse fréquence avec une entrée dudit oscillateur de basse fréquence (314).

5. Système selon l'une quelconque des revendications 1 à 4, dans lequel ladite partie réceptrice GPS (302) est adaptée pour envoyer des interruptions à la partie émetteur-récepteur de communications (304) qui réveillent certain procédés.

6. Système selon l'une quelconque des revendications 1 à 4, dans lequel ladite partie réceptrice GPS (302) est adaptée pour se mettre dans un mode de veille à basse puissance et pour permettre à un utilisateur de décider quand utiliser les fonctions GPS.

7. Système selon l'une quelconque des revendications 1 à 6, comprenant en outre une sortie VCO variable de ladite partie réceptrice GPS (302) réagissant à des demandes de ladite partie de téléphone cellulaire (304) pour générer des fréquences, longueur d'ondes, et phasage particuliers.

8. Système selon l'une quelconque des revendications 1 à 7, comprenant en outre une interruption d'intervalle de temps construite par combinaisons de d'interruptions secondes GPS et millisecondes GPS inclues dans la dite partie réceptrice GPS (302).
